(19) Europäisches Patentamt

European Patent Office

Office européen des brevets

(11) **EP 0 556 554 B1**

(12) **EUROPÄISCHE PATENTSCHRIFT**

(45) Veröffentlichungstag und Bekanntmachung des Hinweises auf die Patenterteilung:
**17.09.1997 Patentblatt 1997/38**

(51) Int. Cl.⁶: **B01D 53/94**, B01J 35/10, B01J 23/56

(21) Anmeldenummer: **93100440.2**

(22) Anmeldetag: **14.01.1993**

(54) **Beschichtungsdispersion für Abgaskatalysatoren**

Coating dispersion for exhaust gas catalysts

Dispersion de revêtement pour catalyseurs d'épuration des gaz d'échappement

(84) Benannte Vertragsstaaten:
**BE DE ES FR GB IT NL PT SE**

(30) Priorität: **14.02.1992 DE 4204421**

(43) Veröffentlichungstag der Anmeldung:
**25.08.1993 Patentblatt 1993/34**

(73) Patentinhaber: **Degussa Aktiengesellschaft**
**60311 Frankfurt (DE)**

(72) Erfinder:
- **Domesle, Rainer, Dr.**
  **W-8755 Alzenau (DE)**
- **Engler, Bernd, Dr.**
  **W-6450 Hanau (DE)**
- **Koberstein, Edgar, Dr.**
  **W-8755 Alzenau (DE)**
- **Lox, Egbert, Dr.**
  **W-6450 Hanau 9 (DE)**
- **Ostgathe, Klaus**
  **W-6234 Hattersheim (DE)**

(56) Entgegenhaltungen:
EP-A- 0 119 715        EP-A- 0 152 052
EP-A- 0 211 233        EP-A- 0 500 154
WO-A-91/08827          DE-A- 3 908 320

## Beschreibung

Die Erfindung betrifft eine Beschichtungsdispersion zur Herstellung einer Trägerschicht für katalytisch aktive Komponenten auf Abgaskatalysatoren mit einem inerten strukturverstärkenden Körper sowie ein Verfahren zur Herstellung der Dispersion und einen mit dieser Dispersion beschichteten monolithischen Katalysator. Die Beschichtungsdispersion besteht aus einer wäßrigen Dispersion eines oder mehrerer temperaturbeständiger Trägermaterialien als Feststoff und gegebenenfalls einem oder mehreren weiteren Feststoffen und/oder einer oder mehreren gelösten Verbindungen als Promotoren und/oder aktiven Komponenten.

Die Schadstoffe von Abgasen, insbesondere von Abgasen aus Verbrennungsmotoren von Kraftfahrzeugen stellen eine Gefährdung für die Gesundheit von Mensch, Tier- und Pflanzenwelt dar und müssen deshalb durch eine Abgasbehandlung möglichst vollständig in unschädliche Verbindungen umgewandelt werden. Bei den Schadstoffen handelt es sich insbesondere um unverbrannte Kohlenwasserstoffe, Kohlenmonoxid und Stickoxide.

Für die Abgasreinigung haben sich multifunktionelle Katalysatoren bewährt, die bei geeigneter Führung des Verbrennungsvorganges die Schadstoffe zu einem hohen Prozentsatz in die unschädlichen Reaktionsprodukte Kohlendioxid, Wasserdampf und Stickstoff überführen können.

An die dazu erforderlichen Katalysatoren werden hinsichtlich Anspringverhalten, Wirksamkeit, Dauerstandsaktivität und mechanischer Stabilität größte Anforderungen gestellt. Sie müssen zum Beispiel beim Einsatz in Kraftfahrzeugen schon bei möglichst niedrigen Temperaturen wirksam werden und auf lange Zeit in allen in Betracht kommenden Temperatur- und Raumgeschwindigkeitsbereichen einen hohen prozentualen Umsatz der zu entfernenden Schadstoffe verbürgen.

Bisher werden neben Schüttgutkatalysatoren vor allem monolithische Katalysatoren verwendet. Sie bestehen entweder aus einem inerten metallischen Wabenkörper oder aus einem inerten, niederoberflächigen keramischen Formkörper, der von vielen parallelen Kanälen durchzogen ist. Als keramisches Material können zum Beispiel Cordierit, Mullit oder $\alpha$-Aluminiumoxid eingesetzt werden. Formkörper aus Cordierit haben sich dabei am besten bewährt. Dieses Material hat einen günstigen thermischen Ausdehnungskoeffizienten, so daß der Träger gute Thermoschock-Eigenschaften aufweist, wie sie bei den raschen Temperaturänderungen in Kraftfahrzeugabgas-Reinigungsanlagen gefordert werden müssen.

Auf den strukturverstärkenden Körper des monolithischen Katalysators wird eine temperaturbeständige Schicht als Träger für die aktiven Katalysatorkomponenten aufgebracht. Diese Trägerschicht besteht gewöhnlich aus einer Mischung eines gegebenenfalls stabilisierten, hochoberflächigen Aluminiumoxids der Übergangsreihe und einem oder mehreren Promotoroxiden wie beispielsweise Seltenerdoxiden , Zirkonoxid, Nickeloxid, Eisenoxid, Germaniumoxid und Bariumoxid. Ein geeignetes stabilisiertes Aluminiumoxid wird in der deutschen Patentschrift DE 38 39 580 beschrieben.

Bei den aktiven Katalysatorkomponenten handelt es sich gewöhnlich um Metalle der Platingruppe wie Platin, Palladium und/oder Rhodium, wobei gemäß der deutschen Offenlegungsschrift DE-OS 38 30 318 das Gewichtsverhältnis zwischen Platin und/oder Palladium und dem gegebenenfalls anwesenden Rhodium von 1 : 1 bis 30 : 1 beträgt.

Die Aufbringung der die Katalyse fördernden hochoberflächigen Trägerschicht erfolgt nach an sich bekannten Beschichtungsverfahren. Man bringt hierzu ein temperaturbeständiges, katalyseförderndes Trägermaterial hoher spezifischer Oberfläche (ca. 50 - 250 m2/g) auf, indem der Katalysatorkörper in eine wäßrige Dispersion des Trägermaterials (gemeinhin als Washcoat bezeichnet) oder in eine Lösung eines Salzes, das sich thermisch in das Trägermaterial überführen läßt, getaucht wird. Nach Entfernen überschüssiger Dispersion bzw. Lösung und anschließendem Trocknen wird der beschichtete Katalysatorkörper bei Temperaturen meist über 450° C kalziniert. Gegebenenfalls muß dieser Vorgang zur Erzielung einer gewünschten Schichtdicke mehrfach wiederholt werden.

Nach prinzipiell gleichem Verfahren werden auch glatte und gewellte Metallfolien beschichtet (vgl. Finnisches Patent 75 744), die nachfolgend durch Aufwickeln oder Herstellung von Folienstapeln und Einschieben in Hüllrohre bzw. durch Sicherung z.B. mittels Axialringen oder Metallstiften zu wabenartigen Formkörpern weiterverarbeitet werden (vgl. Finnische Patentanmeldung 89 6294). Derartig aufgebaute Katalysatorkörper werden ebenso zur Abgasreinigung eingesetzt wie katalytisch beschichtete, perforierte Metallbleche z.B. nach DE-OS 39 39 921 oder DE-OS 29 42 728.

Die katalytisch aktiven Edelmetalle können auf die hochoberflächige Trägerschicht nach zwei verschiedenen Verfahren aufgebracht werden.

Nach dem ersten Verfahren werden die Teilchen der Beschichtungsdispersion ganz oder teilweise noch vor dem Beschichten des Katalysatorkörpers durch Zugabe einer wäßrigen Lösung einer oder mehrerer löslicher Verbindungen der Edelmetalle zur Dispersion imprägniert. Das anschließende Beschichten des Katalysatorkörpers mit der so vorbereiteten Dispersion liefert eine Trägerschicht mit einer homogenen Verteilung der aktiven Komponenten.

Nach dem zweiten Verfahren wird zunächst der Katalysatorkörper mit der Beschichtungsdispersion beschichtet. Nach dem Trocknen der Schicht wird sie zum Beispiel durch Tauchen des Katalysatorkörpers in eine wäßrige Lösung der Edelmetallverbindungen imprägniert. Die so imprägnierte Trägerschicht weist in der Regel eine inhomogene Verteilung der aktiven Komponenten auf. An der Oberfläche ist die Konzentration hoch und nimmt in die Tiefe der Schicht ab. Durch geeignete Führung des Imprägniervorganges kann der Grad der Inhomogenität gesteuert und somit optimal auf den katalytischen Prozeß abgestimmt werden.

Zur Aktivierung des Katalysators werden die Edelmetallkomponenten gewöhnlich in einem Wasserstoff enthaltenden Gasstrom bei Temperaturen von 250 bis 650° C reduziert.

Grundsätzlich können alle für Katalysatoren übliche temperaturbeständigen und hochoberflächigen Trägermaterialien, sowie deren Vorläufer, eingesetzt werden. So kann man die Katalysatorkörper mit einer wäßrigen Dispersion mindestens einer Verbindung aus der Gruppe der Oxide von Magnesium, Calzium, Strontium, Barium, Aluminium, Scandium, Yttrium, der Lanthaniden, der Actiniden, Gallium, Indium, Silizium, Titan, Zirkon, Hafnium, Thorium, Germanium, Zinn, Blei, Vanadium, Niob, Tantal, Chrom, Molybdän, Wolfram sowie aus der Gruppe der Carbide, Boride, Silicide und Nitride der Übergangsmetalle beschichten. Als Vorläufer für solche Stoffe können Hydroxide, Carbonate, Oxidhydrate, Hydroxylcarbonate, Oxalate, Citrate, Acetate und andere leicht zersetzliche Verbindungen dienen.

Bevorzugt werden solche temperaturbeständigen Trägermaterialien eingesetzt, welche die Wirkung der eigentlichen katalytisch aktiven Komponenten synergetisch fördern. Beispiele dafür sind einfache und zusammengesetzte Oxide, wie aktives Aluminiumoxid, Zirkonoxid, Zinnoxid, Ceroxid oder andere Seltenerdoxide, Siliziumoxid, Titanoxid bzw. Silikate wie Aluminiumsilikat bzw. Titanate wie Barium- oder Aluminiumtitanat und Zeolithe.

Besonders bewährt als temperaturbeständige Trägermaterialien haben sich insbesondere die verschiedenen Phasen von aktivem Aluminiumoxid der Übergangsreihe, welche entsprechend der DE 38 39 580 durch Dotierung mit Siliziumoxid und Lanthanoxid, aber auch durch Zirkonoxid und Ceroxid, stabilisiert werden können. Diese Trägermaterialien können mit Promotoren, die beispielsweise die Sauerstoffspeicherfähigkeit des Gesamtkatalysators erhöhen, gemischt oder dotiert werden. Hierfür eignen sich besonders die Oxide von Cer, Eisen, Nickel und/oder Zirkon.

Sie wirken sich günstig auf die Dauerstandsaktivität des Katalysators aus und liefern darüberhinaus Vorteile bei einer gleichzeitigen Oxidation und Reduktion der Schadstoffe von Brennkraftmaschinen in einem einzigen Katalysatorbett.

Für eine lange Lebensdauer des Katalysators auch unter den rauhen Einsatzbedingungen in einem Kraftfahrzeug mit seinen starken mechanischen und ständig wechselnden thermischen Belastungen ist eine gute Haftung der Trägerschicht auf dem Katalysatorkörper Voraussetzung. Im Falle einer Dispersionsbeschichtung wird die Haftung der Schicht auf dem Katalysatorkörper in der Regel um so besser, je feinteiliger die Feststoffe der Beschichtungsdispersion sind. Stand der Technik sind heutzutage Beschichtungsdispersionen mit Korngrößen der Feststoffe im Bereich von 1 bis 15 μm. Damit können auf den Katalysatorkörpern gut haftende Trägerschichten von ca. 5 bis 200 μm Dicke aufgetragen werden. Eine typische Beschichtungsdispersion dieser Art wird in der DE-PS 25 38 706 beschrieben. Sie besteht aus Aluminiumoxid und Ceroxid, wobei beide Komponenten Korngrößen unter 3 μm aufweisen. Ein weiteres Beispiel für solche konventionellen Beschichtungsdispersionen liefert die EP 0 073 703. Sie beschreibt Beschichtungsdispersionen mit einer sehr engen Korngrößenverteilung im Bereich zwischen 1 und 15 μm. Zur Verbesserung der Haftung wird diesen Dispersionen ein Binder aus Aluminiumoxid-Hydroxid (z.B. Böhmit, Pseudoböhmit) oder Aluminiumhydroxid (z.B. Hydrargillit) zugesetzt.

Die gestiegenen Anforderungen der gesetzlichen Vorschriften, insbesondere die neuen kalifornischen Grenzwerte, machen eine weitere Verbesserung der Katalysatoren notwendig.

Angesichts des den neuen Grenzwerten zugrundeliegenden Testzyklus (US-FTP 75) ist insbesondere eine deutliche Verbesserung des Anspringverhaltens über die gesamte Lebensdauer des Katalysators notwendig. Denn bei betriebswarmem Katalysator sind wegen der schon heute üblichen hohen Umsatzraten Verbesserungen nur noch schwer zu erreichen.

Ebenso erfordert der schonende Umgang mit Ressourcen eine optimale Ausnutzung der eingesetzten Edelmetallmengen. Daher ist es wünschenswert, Beschichtungen für Katalysatoren zu finden, die bei gleichem Edelmetalleinsatz eine bessere Aktivität zeigen als herkömmliche Katalysatoren.

Die EP 0 152 052 A2 beschreibt ein Verfahren zur Herstellung von monolithischen Katalysatoren durch Beschichtung mit einer wäßrigen Beschichtungsdispersion. Die Beschichtungsdispersion wird aus feinteiligem Aluminiumoxid und Cerhydroxid hergestellt. Das Cerhydroxid besitzt eine primäre Partikelgröße zwischen 0,1 und 0,8 μm und eine sekundäre Partikelgröße zwischen 0,3 und 20 μm. Die mittlere Partikelgröße des Aluminiumoxids beträgt 50 μm. Die wäßrige Dispersion dieser Materialien wird vor der Beschichtung unter Zusatz von Salpetersäure in einer Kugelmühle für die Dauer von 30 Stunden vermahlen, um die endgültige Beschichtungsdispersion herzustellen. Dieser gründliche Mahlprozeß führt zwangsläufig zu einer Beschichtungsdispersion mit einer monomodalen Korngrößenverteilung. Nach erfolgter Beschichtung der Monolithe werden die katalytisch aktiven Komponenten durch Imprägnieren in die Dispersionsbeschichtung eingebracht.

Als Maßnahme zur Erhöhung der Umsetzungsraten im Falle homogen imprägnierter Trägerschichten wird von der EP 0 119 715 vorgeschlagen, 1-20 % der feinteiligen Feststoffe der Beschichtungsdispersion durch grobteiliges, inaktives Material von mindestens 44 μm Korndurchmesser und mit einem relativ hohen Anteil von Makroporen zu ersetzen. Bei diesem Lösungsvorschlag werden die feinteiligen Feststoffe vor dem Ansetzen der Beschichtungsdispersion mit den katalytisch aktiven Edelmetallen imprägniert, während das grobteilige, inerte Material unimprägniert bleibt. Die Aufgabe des grobteiligen, inerten Materials besteht lediglich darin, das zu reinigende Abgas über die Makroporen besser mit den homogen über die Tiefe der Trägerschicht verteilten Edelmetallkomponenten in Kontakt zu bringen.

Der Erfolg dieser Maßnahme ist im Hinblick auf die Verbesserung des Anspringverhaltens fragwürdig, denn die für die Abgasreinigung wertvollen, hochoberflächigen Feststoffe werden teilweise durch für den katalytischen Prozeß wertloses, niederoberflächiges Material ersetzt.

Das grobteilige Material nimmt nicht direkt am Abgasreinigungsprozeß teil und muß erst durch die sich an den katalytisch aktiven Feststoffen abspielenden exothermen Reaktionen erwärmt werden. Dadurch wird insgesamt die Erwärmung des Katalysators auf Betriebstemperatur verlangsamt und somit sein Anspringverhalten verschlechtert.

Der Spielraum für die Verbesserung der katalytischen Aktivität durch diese Erfindung ist nach oben begrenzt: Einer Verbesserung der Abgasdiffusion in die Tiefe der Trägerschicht bei steigendem Anteil des grobteiligen, inaktiven Materials steht bei gleicher Beschichtungsmenge eine Verminderung des katalytisch aktiven, feinteiligen Materials entgegen. Der Anteil des grobteiligen Materials an der Trägerschicht ist offenbar deshalb auf maximal 20 % beschränkt. Die Menge des aktiven Aluminiumoxids im Katalysator könnte zwar durch größere Schichtdicken wieder erhöht werden, das würde jedoch zwangsläufig zu einer Erhöhung des Abgasgegendrucks und somit zu einem Leistungsverlust des Motors führen. Weiterhin würde wegen der größeren Schichtstärke zusammen mit dem feinteiligen Material auch Edelmetall in größeren Tiefen abgelagert und somit für die gasförmigen Schadstoffe unzugänglicher, was die Vorteile einer durch grobes Inertmaterial verbesserten Abgasdiffusion wieder aufheben würde. Gemäß der EP 0 119 715 werden zur Herstellung des grobteiligen Materials Ausschußkatalysatoren verwendet, die auf diese Weise sinnvoll entsorgt werden sollen. Das erweist sich in der Praxis aber als ungünstig, da die hochgebrannten Katalysatorkörper aus Cordierit oder Korund wegen ihrer hohen Abrasivität zum vorzeitigen Verschleiß von Mahl-und Beschichtungswerkzeugen führen.

Außerdem neigen solche hochgebrannten, dichten Materialien zum Absetzen in den Beschichtungsdispersionen und führen schon bei geringen Unterschieden in der Behandlung der Beschichtungsdispersion (ungleichmäßiges Rühren) zu Viskositätsunterschieden und in der Folge zu ungleichmäßigen Beschichtungsergebnissen. Aus diesen Gründen hat sich das besprochene Verfahren in der Praxis offenbar nicht durchgesetzt.

Es besteht somit weiterhin der Bedarf für eine Beschichtungsdispersion, die Katalysatoren mit insbesondere verbessertem Anspringverhalten, hohen Umsetzungsraten bei betriebswarmem Katalysator und guter Dauerstandsaktivität liefert. Es ist deshalb Aufgabe der vorliegenden Erfindung, eine solche Beschichtungsdispersion anzugeben.

Diese Aufgabe wird gelöst durch eine Beschichtungsdispersion zur Herstellung von katalytischen Überzügen auf einem inerten, strukturverstärkenden Körper aus einer wäßrigen Dispersion eines oder mehrerer temperaturbeständiger Trägermaterialien als Feststoff, wobei die Feststoffe der Dispersion eine mehrmodale Korngrößenverteilung mit verschiedenen Kornfraktionen aufweisen.

Die Beschichtungsdispersion ist dadurch gekennzeichnet, daß sowohl fein- und grobteilige Feststoffe in einer hochoberflächigen, aktiven Modifikation vorliegen, und die feinteilige Kornfraktion ein Verteilungsmaximum der Korngrößenverteilung zwischen 1 und 10 µm aufweist, und die gröbste Kornfraktion mittlere Korndurchmesser zwischen 20 und 100 µm besitzt, wobei das Gewichtsverhältnis der feinteiligen Fraktion zur grobteiligen Fraktion zischen 20 : 1 und 1 : 2 liegt.

Als strukturverstärkende Körper können Monolithe aus Keramik oder Metall, aber auch glatte, gewellte, perforierte und/oder geschlitzte Metallfolien eingesetzt werden, die nachfolgend zu monolithischen Trägerkörpern verformt werden. Perforierte Metallrohre, wie sie speziell zur Abgasreinigung von Zweitaktmotoren vorgeschlagen werden, sind ebenfalls verwendbar.

Durch die mehrmodale Korngrößenverteilung der Feststoffe enthält die Trägerschicht auch sehr grobe Kornfraktionen. Die gröberen Kornteile verleihen der Trägerschicht eine rauhe Oberfläche, die gegenüber der glatten Oberfläche einer Trägerschicht üblicher Katalysatoren aus einem einheitlich feinkörnigen Material wesentlich vergrößert sein kann. In Grenzfall einer Trägerschicht mit einer Monolage dicht gepackter Kugeln, deren Durchmesser dem doppelten der mittleren Schichtdicke entspricht, ließe sich eine geometrische Oberflächenvergrößerung gegenüber einer glatten Schicht um den Faktor 1,9 erzielen.

Neben der reinen geometrischen Oberflächenvergrößerung wurde bei der erfindungsgemäßen Beschichtungsdispersion aber noch ein weiterer, positiver Effekt gefunden:

Bei den normalerweise vorliegenden Abmessungen der Strömungskanäle der Katalysatorkörper und den im Teillastbereich des Motors auftretenden Gasmengenströmen ist die Gasströmung in den Katalysatorkanälen laminar, abgesehen von einer Übergangszone von ca. 1 cm Länge hinter der Eintrittsfläche des Katalysators, in der die zunächst turbulente Strömung in eine laminare Strömung übergeht.

Die unter diesen Betriebsbedingungen maximal erreichbaren Umsetzungsraten für die Schadstoffe werden normalerweise nicht durch das Aktivitätspotential der katalytischen Komponenten begrenzt, sondern durch den Gastransport aus der Gasströmung zu den beschichteten Kanalwänden. Wegen der laminaren Strömungsform erfolgt dieser Transport über einen relativ langsamen Diffusionsprozeß, so daß das Aktivitätspotential der katalytisch aktiven Komponenten nicht voll ausgeschöpft werden kann.

Die erfindungsgemäße Beschichtungsdispersion erweist sich nun gerade unter diesen Betriebsbedingungen als besonders vorteilhaft, da sie durch die rauhe Oberfläche zu einer zusätzlichen Verwirbelung und damit zu einem intensiveren Austausch zwischen Abgas und Beschichtungsoberfläche führt. Das ist besonders im Falle inhomogen imprägnierter Trägerschichten mit der maximalen Edelmetallkonzentration in oberflächennahen Schichtbereichen günstig. Somit führt die erfindungsgemäße Beschichtungsdispersion zu zwei sich gegenseitig verstärkenden, positiven Effekten, nämlich

a) zu einer Vergrößerung der wirksamen geometrischen Katalysatoroberfläche und
b) zu einer besseren Wechselwirkung zwischen Katalysatoroberfläche und Abgas durch Verwirbelung des Abgases in der Nähe der Oberfläche.

Diese beiden Effekte bewirken ein gegenüber dem Stand der Technik verbessertes Anspringverhalten und einen verbesserten Umsetzungsgrad der Schadstoffe bei gleichem Edelmetalleinsatz, da das Aktivitätspotential der Edelmetallkomponenten jetzt besser ausgenutzt wird. Voraussetzung für die wirksame Nutzung dieser positiven Effekte ist allerdings, daß alle Kornfraktionen der Feststoffe der Beschichtungsdispersion in einer aktiven, hochoberflächigen Form vorliegen, deren große spezifische Oberfläche (BET-Oberfläche, zu bestimmen nach DIN 66 132) voll für die Aufnahme der katalytisch aktiven Metallkomponenten zur Verfügung steht.

Die Oberflächenrauhigkeit der erfindungsgemäßen Beschichtungsdispersion wird im wesentlichen von den groben Kornanteilen der Feststoffe verursacht. Je größer der mittlere Korndurchmesser der groben Kornfraktion ist, um so größer ist auch die Oberflächenrauhigkeit und damit das Ausmaß der Abgasverwirbelung. Gleichzeitig steigt der Abgasgegendruck mit zunehmender Oberflächenrauhigkeit leicht an. Es wurde nun gefunden, daß die optimale Oberflächenrauhigkeit vom Durchmesser der Abgaskanäle der monolithischen Katalysatorkörper abhängt. Das Verhältnis von Oberflächenrauhigkeit der Beschichtung, gemessen als mittlere quadratische Rauhigkeit, zum freien Kanaldurchmesser nach erfolgter Beschichtung sollte im Bereich zwischen 0,02 bis 0,1 liegen. Dieser empirisch gefundene Zusammenhang macht es notwendig, die Dicke der Beschichtung und die mittlere Korngröße der groben Kornanteile unter Berücksichtigung des verbleibenden freien Kanaldurchmessers geeignet aufeinander abzustimmen.

Bei typischen Beschichtungsdicken von 20 bis 40 $\mu$m und üblichen Kanaldurchmessern von 1 mm haben sich mittlere Korndurchmesser der groben Kornanteile der Beschichtungsdispersion von 20 bis 100 $\mu$m bewährt. Bei diesen Abmessungen führt die verstärkte Oberflächenrauhigkeit der monolithischen Katalysatorkörpern noch zu keiner meßbaren Leistungseinbuße der Motoren infolge leicht erhöhten Abgasgegendrucks.

Die vorteilhaften Wirkungen der erfindungsgemäßen Beschichtungsdispersion werden auch schon in sehr einfacher Weise durch eine nur bimodale Korngrößenverteilung aller Feststoffe der Dispersion erzielt. Für die Abstimmung der Eigenschaften des fertigen Katalysators an die Anwendungserfordernisse ist es vorteilhaft, wenn einige der Feststoffmaterialien oder alle jeweils nur einer Kornfraktion der Dispersion angehören.

Zur Erzielung einer optimalen Oberflächenvergrößerung der Trägerschicht und Verwirbelung des Abgases bei gleichzeitig guter Haftfestigkeit der Trägerschicht auf dem Katalysatorkörper liegt das Verteilungsmaximum der feinteiligen Kornfraktion zwischen 1 und 10 $\mu$m. Die Verwendung von extrem feinteiligen Stoffen wie Solen, Gelen und Pseudoböhmiten ist ungünstiger, da diese Stoffe die Poren der grobkörnigen Fraktionen bzw. die Poren zwischen den Körpern verkleben können und somit aufgrund des erschwerten Stoffaustausches zu einer unterlegenen katalytischen Aktivität führen. Das Gewichtsverhältnis der feinteiligen Fraktion zur grobteiligen Fraktion wird auf einen Wert zwischen 20 : 1 und 1 : 2 eingestellt. Als besonders vorteilhaft haben sich Gewichtsverhältnisse zwischen 12 : 1 und 2 : 1 erwiesen.

Bei einem Gewichtsverhältnis von 1 : 2 wird unter idealisierten Bedingungen die theoretisch maximal mögliche Oberflächenvergrößerung der Beschichtung erzielt. Es hat sich jedoch gezeigt, daß sich die optimale Wirkung der erfinderischen Maßnahmen auf Anspringverhalten und Aktivität des Katalysators schon bei den oben angegebenen Gewichtsverhältnissen der feinteiligen zur grobteiligen Fraktion von 12 : 1 bis 2 : 1 entfaltet. Offensichtlich erreicht die Abgasverwirbelung schon bei diesen Gewichtsverhältnissen ihr Maximum. Eine weitere Steigerung des Grobanteils führt zwar zu einer nochmaligen Vergrößerung der Oberfläche der Beschichtung, aber vermutlich zu einer zunehmenden Abnahme der Abgasverwirbelung, die den positiven Einfluß der Oberflächenvergrößerung zunichte macht.

Für die Verwirbelung des Abgases ist es ausreichend, wenn nur das hochoberflächige Trägermaterial eine bimodale Korngrößenverteilung aufweist. Die Promotoren können dagegen entsprechend Anspruch 5 nur in der feinteiligen Kornfraktion vorliegen.

Vorteilhafterweise verwendet man für das temperaturbeständige Trägermaterial oxidische Materialien wie Aluminiumoxid, Titanoxid, Siliciumoxid, Zinnoxid, Zirkonoxid, Magnesiumoxid, Aluminiumsilikat, Zeolithe und/oder Erdalkalititanat, gebenenfalls in dotierter Form. Als dotierte Trägermaterialien können zum Beispiel gegen Phasenumwandlung mit Lanthan oder Zirkon stabilisiertes, aktives Aluminiumoxid, mit Cer oder Yttrium dotiertes Zirkonoxid oder ionenausgetauschte Zeolithe eingesetzt werden.

Als Promotoren eignen sich vorzugsweise ein oder mehrere Verbindungen der Übergangsmetalle, Seltenen Erden, Erdalkalimetalle und/oder Verbindungen der Elemente der 3. bis 5. Hauptgruppe.

In einer besonders günstigen Ausführungsform der erfindungsgemäßen Beschichtungsdispersion besteht das temperaturbeständige Trägermaterial aus aktivem, gegebenenfalls stabilisiertem, Aluminiumoxid mit einer spezifischen BET-Oberfläche von 50 bis 350, vorzugsweise 100 bis 200 $m^2$/g und weist ein Gesamtporenvolumen von 0,3 bis 2 ml/g auf, wobei das Gewichtsverhältnis von feinteiliger zu grobteiliger Fraktion 18 : 1 bis 1 : 1, vorzugsweise 12 : 1 bis 7 : 1, beträgt. Besonders bewährt haben sich solche Materialien, deren Gesamtporenvolumen etwa zu gleichen Teilen von Mesoporen mit Porendurchmessern von 2 bis 50 nm und Makroporen mit Porendurchmessern größer als 50 nm gebildet wird.

Die Trockenmasse der Dispersion kann neben dem Trägermaterial Aluminiumoxid 3 bis 70 Gew.-% Ceroxid, 0 bis 25 Gew.-% Zirkonoxid, 0 bis 15 Gew.-% weitere Seltenerdoxide, 0 bis 15 Gew.-% Nickeloxid, 0 bis 10 Gew.-% Eisenoxid, 0 bis 10 Gew.-% Germaniumoxid und 0 bis 10 Gew.-% Bariumoxid als Promotoren enthalten.

Zur Herstellung einer homogen mit katalytisch aktiven Metallkomponenten dotierten Beschichtung können die Metallkomponenten schon der Dispersion zugegeben werden. Vorzugsweise werden dazu der Dispersion bezogen auf ihre Trockenmasse 0,01 bis 10 Gew.-% Edelmetalle elementar oder in Form ihrer Verbindungen beigemischt, vorzugsweise Platin, Palladium und/oder Rhodium oder Iridium. Dabei sollte das Gewichtsverhältnis zwischen Platin und Palladium von 1:10 bis 10:1 und das Gewichtsverhältnis zwischen Platin und/oder Palladium und dem gegebenenfalls anwesenden Rhodium oder Iridium von 1 : 1 bis 30 : 1 betragen.

Beim Aufbringen der katalytisch aktiven Edelmetalle können weitere katalytisch positive Effekte dadurch erhalten werden, daß die grobe Partikelfraktion mit ihren aus dem Untergrund herausragenden Körnern bevorzugt ein Edellmetallsalz adsorbiert und dieses dort anreichert. Auf diese einfache Weise kann eine inhomogene Edellmetallzusammensetzung der gaszugewandten Oberfläche der Beschichtung geschaffen werden. Ein vergleichbarer, ebenfalls vorteilhafter Effekt kann erreicht werden, indem die grobteilige Komponente vorab mit einer Edelmetallkomponente belegt und dem feinteiligen Feststoff beigemischt wird.

Die erfindungsgemäße Beschichtungsdispersion kann zum Beispiel dadurch hergestellt werden, daß Feststoffe verwendet werden, die zunächst in einer einheitlichen Korngrößenverteilung vorliegen, welche der grobteiligen Fraktion der fertigen Beschichtungsdispersion entspricht. Ein Teil davon wird naß zu der Korngrößenverteilung der feinteiligen Fraktion vermahlen. Anschließend wird das Mahlgut mit der restlichen Mange der Feststoffe homogen vermischt. Selbstverständlich ist es auch möglich, fein- und grobteilige Feststoffe entsprechender Korngröße ohne Mahlung zu vermischen. Jedoch kann ein derartiges Verfahren oft den Nachteil aufweisen, daß die Haftung der Beschichtungsdispersion auf dem Körper nicht ausreichend ist.

Insbesondere läßt sich eine Beschichtungsdispersion mit aktivem Aluminiumoxid als Trägermaterial und Ceroxid, Zirkonoxid, Nickeloxid, Eisenoxid, Germaniumoxid und Bariumoxid als Promotoren dadurch herstellen, daß ausgehend von einer Menge Aluminiumoxid, deren Korngrößenverteilung der grobteiligen Fraktion der fertigen Beschichtungsdispersion entspricht, die erforderliche bimodale Verteilung dadurch erhalten wird, daß ein Teil des Aluminiumoxids unter Zusatz der gewünschten Mengen Ceroxid, Zirkonoxid, Nickeloxid, Eisenoxid, Germaniumoxid, Bariumoxid und Wasser naß zu der Korngrößenverteilung der feinteiligen Fraktion vermahlen und anschließend das Mahlgut mit der restlichen unvermahlenen Menge Aluminiumoxid homogen vermischt wird.

Ein monolithischer Katalysator nach dem Oberbegriff von Anspruch 9 enthält als oxidische Beschichtungsdispersion eine mehrmodale Dispersion gemäß den Ansprüchen 2 bis 6, die in einer Menge von 30 bis 400, bevorzugt 100 - 300, insbesondere 120 - 270 g Trockenmasse pro Liter Katalysatorvolumen auf den Katalysatorkörper aufgebracht wird. Die aufgebrachte Menge richtet sich dabei nach der geometrischen Oberfläche des zu beschichtenden Katalysatorkörpers, d.h. bei üblichen Monolithen mit frei durchströmbaren Kanälen nach der Zelldichte.

Die fertige Beschichtung dieses Katalysators weist eine homogene Edelmetallverteilung über die Tiefe der Beschichtung auf. Einen besonders bevorzugten Katalysator nach dem Oberbegriff von Anspruch 10 erhält man, wenn als Beschichtungsdispersion eine Dispersion gemäß den Ansprüchen 1 bis 6 verwendet wird, die in einer Menge von 30 bis 400, bevorzugt 100 - 300, insbesondere 120 bis 270 g pro Liter Katalysatorkörper auf den Katalysator aufgebracht wird. Erst danach wird der Katalysator mit den katalytisch aktiven Metallkomponenten imprägniert und weist daher in der Regel eine inhomogene Metallverteilung auf, deren Konzentration an der Oberfläche größer als in der Tiefe der Schicht ist.

Ein Vorteil der erfindungsgemäßen Beschichtungsdispersion ist auch ihre Fähigkeit, die Kanäle von Katalysatorkörpern, insbesondere von solchen mit unporösen Kanalwänden wie zum Beispiel Metallträger, gleichmäßiger zu beschichten als herkömmliche Beschichtungsdispersionen. Bei herkömmlichen Beschichtungsdispersionen beobachtet man eine starke Ansammlung des Schichtmaterials in den Kanalecken durch die Oberflächenspannung der Dispersion. Durch die groben Kornanteile ist dieser Effekt bei der erfindungsgemäßen Beschichtungsdispersion verringert. Die Katalysatoraktivität und damit auch die Erwärmung durch die exothermen Umsetzungsprozesse sind somit gleichmäßiger auf den Querschnitt eines Katalysatorkanals verteilt. Zusammen mit dem insgesamt intensiveren Austausch des Abgases mit der Katalysatoroberfläche in den Kanälen führt das zu einer gleichmäßigeren Temperaturverteilung über den ganzen Querschnitt des Katalysatorkörpers.

Sofern als Körper ein glattes, gewelltes, perforiertes und/oder geschlitztes Metallblech eingesetzt wird, kann der erfindungsgemäße Katalysator auch dadurch erhalten werden, daß dieses zur Herstellung eines monolithartigen Formkörpers durch nachträgliches Verformen, Schneiden, Stapeln, Aufwickeln verwendet wird. Bei dieser Ausführung ist zwar herstellungsbedingt nicht mit einer Anhäufung des Schichtmaterials in den Kanalecken zu rechnen, jedoch erweisen sich auch hier die groben Partikel der erfindungsgemäßen Dispersion hinsichtlich der Verwirbelung des Abgases als Vorteil. Zusätzlich ergeben sich an den Kontaktstellen der beschichteten Metallbleche Vorteile dadurch, daß die groben Partikel sich verzahnen und ein Verschieben zweier Folien gegeneinander erschweren.

Dieselben Vorteile wie bei der Beschichtung eines unvorbehandelten Körpers werden erzielt, wenn die mehrmodale Beschichtungsdispersion als Deckschicht auf eine Zwischenschicht aus katalytisch neutralem und/oder katalytisch aktivem feinteiligem Material aufgebracht ist.

Als katalytisch neutral sind dabei Zwischenschichten zu verstehen, die z.B. aus Gründen der Haftungsverbesserung vor einer Dispersionsbeschichtung aufgetragen werden (DE-OS 23 04 351). Bei besonderen Ausführungsformen der Katalysatoren ist z.B. in DE-OS 38 35 184 vorgeschlagen, diese aus mehreren übereinanderliegenden Schichten unterschiedlicher Zusammensetzung aufzubauen. Bei einem derartigen Katalysatoraufbau ist es zur Erzielung der inhärenten Vorteile durchaus möglich und ausreichend, den Katalysator lediglich mit einer Deckschicht der erfindungsgemäß mehrmodalen Beschichtungsdispersion herzustellen.

Eine weitere Ausführungsform des Katalysators besteht darin, auf eine Beschichtung, die mittels einer mehrmodalen Beschichtungsdispersion erhalten wurde, eine Deckschicht aus aktivem und/oder schützendem feinteiligen Material aufzubringen. Im Falle dünner Deckschichten können die Vorteile der erfindungsgemäßen Dispersion nämlich auch dann erhalten werden, wenn nur die untere Schicht die erfindungsgemäße hohe Oberflächenrauhigkeit aufweist. Die zu wählende Korngröße für den grobteiligen Anteil orientiert sich dabei an der Dicke der aufzubringenden Deckschicht.

Derartige, vergleichsweise dünne Deckschichten können in Form katalytisch aktiven Materials bei Katalysatoren mit schichtartigem Aufbau wie z.B. nach DE-OS 38 35 184 vorliegen. Ebenso können sie aus katalytisch inertem, feinteiligen Material ausgeführt sein und den Schutz der darunterliegenden Katalysatorschicht z.B. gegen Katalysatorgifte (DE-OS 31 46 004 und EP 0 179 578) oder zum Fernhalten unerwünschter Reaktionspartner dienen. Vorteilhaft läßt sich eine untere Schicht aus der erfindungsgemäßen Beschichtungsdispersion auch einsetzen, wenn es gilt, die Haftung der Deckschicht über die Verankerung an rauhen Oberflächen zu verbessern.

Die Erfindung wird im folgenden anhand von Ausführungsbeispielen erfindungsgemäßer Beschichtungsdispersionen näher erläutert. Mit den Dispersionen wurden Katalysatorkörper beschichtet und die Wirksamkeit der erfinderischen Maßnahmen durch vergleichende Tests der erfindungsgemäßen Katalysatoren mit Katalysatoren nach dem Stand der Technik belegt.

Es zeigen:

Figur 1: Korngrößenverteilung einer Beschichtungsdispersion nach dem Stand der Technik entsprechend Vergleichsbeispiel 1.

Figur 2: Korngrößenverteilung einer erfindungsgemäßen Beschichtungsdispersion entsprechend Beispiel 1.

Figur 3: Schematische Darstellung eines Katalysatorquerschnitts.

Figur 4: Isothermen auf der Austrittsfläche der Katalysatoren

       a) gemäß Vergleichsbeispiel 1
       b) gemäß der Erfindung von Beispiel 1

Figur 5: Temperaturverteilung über den Querschnitt am Ausgang der erfindungsgemäßen Katalysatoren von Beispiel 3a jeweils 1 Minute nachdem das Abgas vor dem Katalysator die angegebenen Temperaturen erreicht hat.

Figur 6: Temperaturverteilung wie in Figur 5 für die erfindungsgemäßen Katalysatoren nach Beispiel 3b.

Figur 7: Temperaturverteilung wie in Figur 5 für die Katalysatoren nach dem Stand der Technik gemäß Vergleichsbeispiel 3.

Als Katalysatorkörper kamen Wabenkörper aus Cordierit mit 102 mm Länge, 152 mm Durchmesser und 62 Kanälen pro $cm^2$ zum Einsatz. Die Wandstärken der Kanäle betrugen 0,16 mm.

Als Trägermaterialien für die Beschichtungsdispersionen wurden zwei verschiedene Aluminiumoxide, Aluminiumoxid A und Aluminiumoxid B, mit folgenden Eigenschaften eingesetzt:

| | Aluminiumoxid A | Aluminiumoxid B |
|---|---|---|
| mittl. Korndurchm.: | 60 μm | 23 μm |
| | 90 % > 3 μm | 90 % > 2,8 μm |
| | 10 % > 76 μm | 10 % > 33 μm |
| spezifische Oberfläche : | 180 m$^2$/g | 140 m$^2$/g |
| Mesoporen ($\varnothing$ 2 - 5 nm) : | 0,48 ml/g | 0,48 ml/g |
| Makroporen ($\varnothing$ > 50 nm) : | 0,52 ml/g | 0,52 ml/g |

Entsprechend der obigen Aufstellung unterschieden sich die beiden Trägermaterialien im wesentlichen durch ihre Korngröße und ihre spezifische Oberfläche. Ihre Porenradienverteilungen waren annähernd gleich. Bei einem mittleren Korndurchmesser von 60 μm hatten 90 % der Teilchen von Aluminiumoxid A einen Durchmesser größer als 3 μm und 10 % der Teilchen einen Durchmesser größer als 76 μm. Die entsprechenden Daten für Aluminiumoxid B können aus obiger Aufstellung entnommen werden. Bei beiden Aluminiumoxid-Qualitäten handelte es sich um reines γ-Aluminiumoxid ohne Stabilisierungszusätze.

Als Promotoren kamen Ceroxid, Zirkonoxid, Eisenoxid und Bariumoxid zum Einsatz, die teils als Feststoffe und teils als lösliche Acetat- oder Nitratverbindungen der Dispersion zugegeben wurden.

Die Katalysatorkörper wurden durch Eintauchen in die Beschichtungsdispersion beschichtet. Die überflüssige Dispersion wurde jeweils mit Druckluft ausgeblasen. Anschließend wurden die Katalysatorkörper bei 250° C für 1 Stunde an Luft getrocknet. Die so erhaltenen Katalysatorvorstufen wurden dann mit einer wäßrigen Lösung von Platintetramminnitrat und Rhodiumnitrat imprägniert und nach einer 3 -stündigen Trocknung bei 300° C für die Dauer von 3 Stunden bei 600° C an Luft kalziniert. Zur Aktivierung wurden die Katalysatoren abschließend bei 600° C für 2 Stunden im Wasserstoffstrom reduziert. Der Gehalt der Imprägnierlösung an Platin und Rhodium wurde so gewählt, daß sich auf den fertigen Katalysatoren ein Gewichtsverhältnis von Platin zu Rhodium von etwa 5 : 1 einstellte.

Die Anwendungstests der fertig beschichteten Katalysatorkörper erfolgten jeweils an einem Motorprüfstand mit einem 1,8 l Ottomotor (66 KW), der mit einer KE-Jetronic von Fa. Bosch ausgerüstet war. Die mit den Katalysatoren erzielbaren Schadstoffkonversionen wurden bei unterschiedlichen Luftzahlen Lambda gemessen. Zur Simulation realer Betriebsbedingungen wurde die Abgaszusammensetzung bei vorgegebenen mittleren Luftzahlen durch periodische Änderung des Luft-Kraftstoff-Verhältnisses ( A/F = Air to Fuel ratio ) moduliert. Dazu wurde entweder der Abgasstrom mit Luftpulsen beaufschlagt oder die KE-Jetronic entsprechend manipuliert.

Weiterhin wurden zur Überprüfung des Temperaturaustauschs zwischen Abgas und Katalysatorkörper Aufnahmen der Austrittsfläche der Katalysatoren mit einer Infrarotkamera gemacht. Diese Aufnahmen dienten zur Bestimmung der Temperaturverteilung über den Austrittsquerschnitt der Katalysatoren jeweils 1 Minute nach Beaufschlagung der Katalysatoren mit Luft oder Abgas einer vorgewählten Temperatur.

Abschließend wurden die Katalysatoren dem Test nach US-FTP 75 unterworfen, um die Auswirkung der erfinderischen Maßnahmen auf die Ergebnisse dieses den neuen US-Abgasgrenzwerten zugrunde liegenden Testzyklus zu bestimmen.

Die Abgasreinigung der Katalysatoren wurde jeweils im frischen und im motorgealterten Zustand gemessen. Die Motoralterung umfaßte zwei Betriebsphasen, die periodisch bis zum Abschluß der Motoralterung wiederholt wurden. Während der ersten 50 Minuten wurde der Motor bei Vollast, d.h. bei 5600 U/min und 86 Nm Last, betrieben. Hierbei stellten sich ein Lambda-Wert (Luftzahl) von 0,993 und eine Abgastemperatur vor dem Katalysator von 1000° C ein. In der zweiten, nur zehnminütigen Betriebsphase, wurde dem Abgasstrom bei gleichen Motorbetriebsdaten Luft zugegeben. Die Luftzahl erhöhte sich dadurch auf 1,04 und die Abgastemperatur stieg auf 1050° C an.

Beispiel 1:

Beschichtungsdispersion mit zwei unterschiedlichen Kornfraktionen von Aluminiumoxid A; Promotoren: Ceroxid und Zirkonoxid als Feststoffe

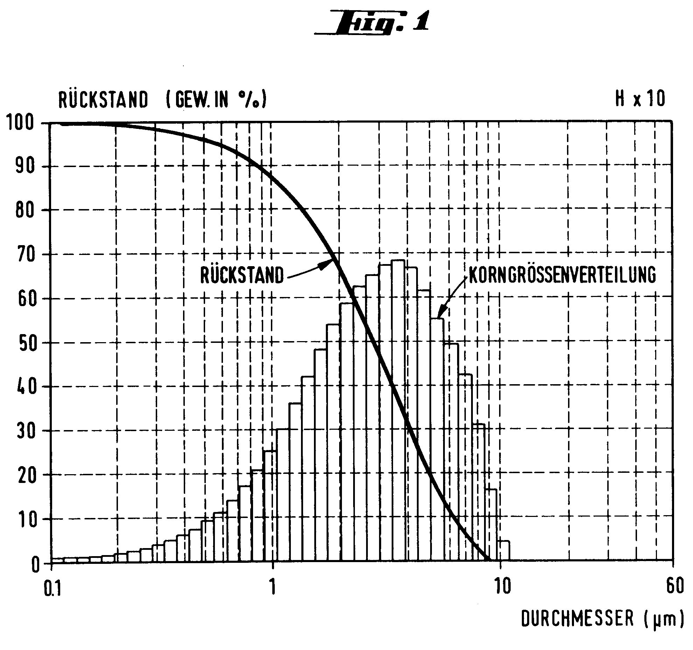

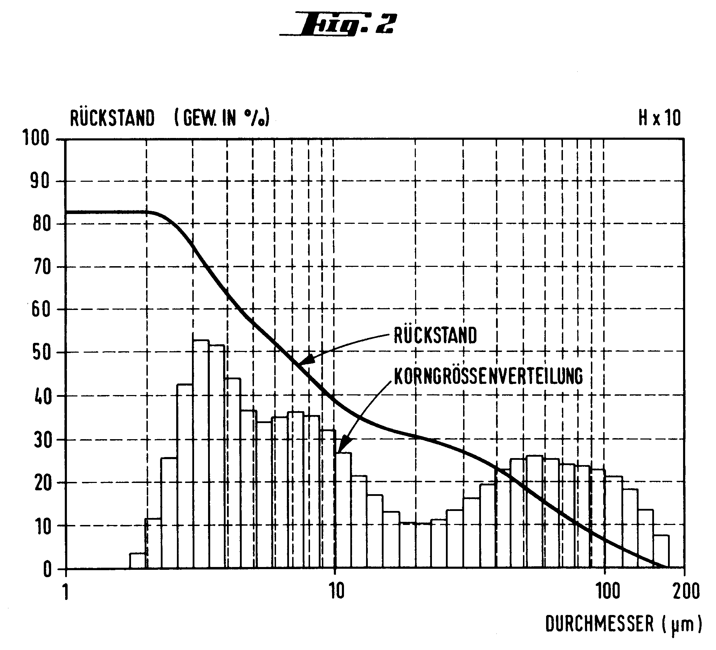

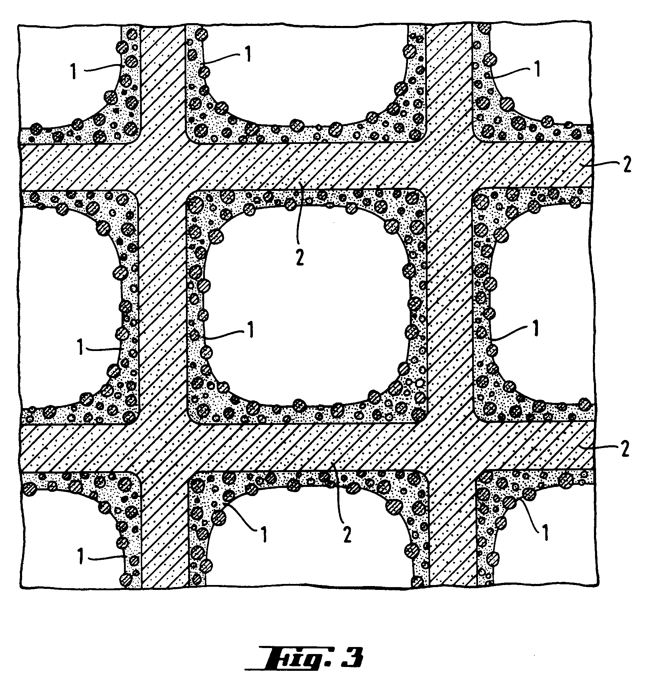

Zum Ansetzen der Dispersion wurden 3 l Wasser vorgelegt. Zu diesem Wasser wurden nacheinander 30 g Zirkonoxid, 400 g Aluminiumoxid A und 400 g Ceroxid mit einer spezifischen Oberfläche von 25 m2/g zugegeben. Die mittlere Korngröße der Promotoren entsprach der von Aluminiumoxid A. Die Dispersion wurde naß gemahlen, bis eine Korngrößenverteilung mit einem Maximum der Verteilung bei ca. 2,8 $\mu$m entsprechend der in Fig. 1 dargestellten Korngrößenverteilung erreicht war. Die Korngrößenverteilung wurde mit einem Granulometer der Firma Cilas vermessen. Sie entspricht der Korngrößenverteilung wie sie für die Herstellung herkömmlicher Katalysatoren verwendet wird. Nach diesem Mahlvorgang wurden weitere 400 g unvermahlenes Aluminiumoxid A zur Dispersion hinzugegeben und die Dispersion homogenisiert. Die Korngrößenverteilung dieser erfindungsgemaßen Beschichtungsdispersion hatte den in Fig. 2 wiedergegebenen bimodalen Charakter.

Mit dieser erfindungsgemäßen Beschichtungsdispersion wurden Katalysatorkörper beschichtet und anschließend imprägniert und aktiviert. Die so hergestellten Katalysatoren enthielten 123 g Washcoat zusammengesetzt aus 80 g $\gamma$-Aluminiumoxid, 40 g Ceroxid und 3 g Zirkonoxid sowie 1,17 g Platin und 0,235 g Rhodium pro Liter Wabenkörpervolumen.

Die Katalysatoren gemäß Beispiel 1 werden im folgenden mit K1 bezeichnet.

Vergleichsbeispiel 1:

Beschichtungsdispersion mit nur einer Kornfraktion von Aluminiumoxid A;
Promotoren: Ceroxid und Zirkonoxid als Feststoffe

Zum Vergleich der katalytischen Eigenschaften der erfindungsgemaßen Katalysatoren von Beispiel 1, insbesondere ihres Anspringverhaltens mit Katalysatoren nach dem Stand der Technik wurden nach der in Beispiel 1 angegebenen Vorschrift Vergleichskatalysatoren hergestellt. Im Unterschied zu Beispiel 1 wurde jedoch die gesamte Menge $\gamma$-Aluminiumoxid von 800 g zusammen mit den Promotoren zu der Korngrößenverteilung von Fig. 1 naß vermahlen.

Die Katalysatoren gemäß Vergleichsbeispiel 1 werden im folgenden mit VK1 bezeichnet.

Oberflächenstruktur und Schichtdickenverteilung der Katalysatoren K1 und VK1:

Zur Untersuchung der Oberflächenstruktur der Trägerschichten der Katalysatoren von Beispiel 1 und Vergleichsbeispiel 1 wurden die Katalysatorkörper in Längsrichtung aufgeschnitten und die Kanalstege mikroskopisch untersucht. Die mit der erfindungsgemäßen Beschichtungsdispersion nach Beispiel 1 behandelten Wabenkörper wiesen eine wesentlich rauhere Oberfläche als die nach dem Stand der Technik beschichteten Katalysatorkörper auf. Dieser Effekt war besonders deutlich in den Stegmitten, wo sich infolge der Oberflächenspannungen der Beschichtungsdispersion die geringsten Schichtdicken ausbilden.

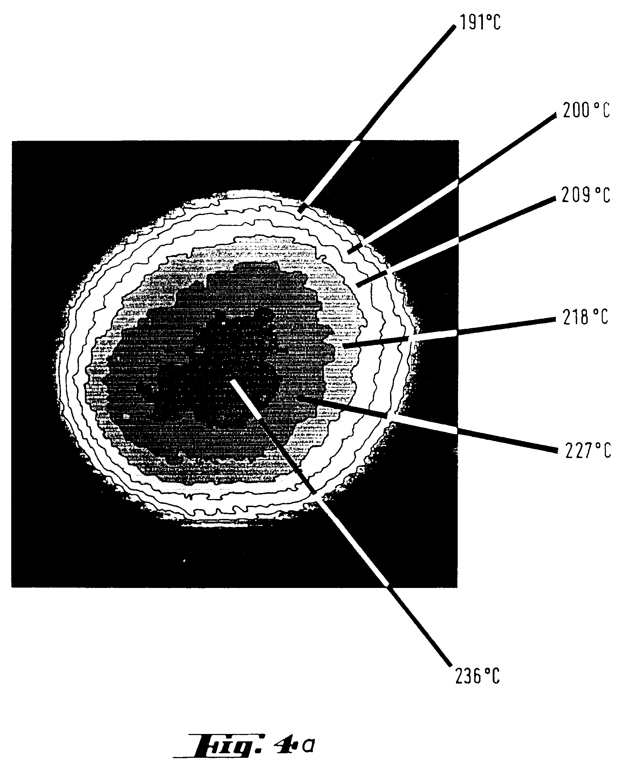

Rasterelektronenmikroskopische Untersuchungen von Querschnitten der Katalysatorkörper zeigten die in Figur 3 schematisch wiedergegebenen Beschichtungsverhältnisse. Hierbei bezeichnet (1) die Trägerschicht und (2) die Kanalwand aus Cordierit. Aufgrund der Oberflächenspannung der Beschichtungsdispersion sammelt sich in den Kanalecken mehr Beschichtungsmaterial an als auf den Stegmitten. Dieser Effekt ist bei der erfindungsgemäßen Beschichtungsdispersion geringer. Die mittleren Schichtdicken auf den Stegmitten bei Verwendung der erfindungsgemäßen Beschichtungsdispersion nach Beispiel 1 betrugen ca. 34 $\mu$m, während die Trägerschichten von Vergleichsbeispiel 1 nur eine mittlere Schichtdicke auf den Stegmitten von ca. 16 $\mu$m aufwiesen.

Anspringverhalten der Katalysatoren K1 und VK1:

Zur Testung des Anspringverhaltens der erfindungsgemäß beschichteten Katalysatoren im frischen Zustand und nach 20 h Alterung wurde die Konversion der Schadstoffe (Kohlenmonoxid, Kohlenwasserstoffe, Stickoxide) als Funktion der Abgastemperatur vor Katalysator bestimmt. Die Bestimmung erfolgte jeweils unter Gleichgewichtsbedingungen durch stufenweise Anhebung der Abgastemperatur mittels eines Wärmetauschers. Während dieser Tests wurde der Motor im Teillastbereich bei 3000 U/min und einer Last von 30 Nm betrieben, wodurch sich eine Belastung des Katalysators mit einer Raumgeschwindigkeit von 60000 h$^{-1}$ ergab. Die Abgaszusammensetzung wurde im unterstöchiometrischen Bereich (Lambda = 0,995) durch periodisches Pulsen von Luft mit 1 Hz $\pm$ 0,5 A/F variiert.

Konversion von Kohlenmonoxid, Kohlenwasserstoffen und Stickoxiden durch die Katalysatoren K1 und VK1:

Die Konversion der Schadstoffe der betriebswarmen Katalysatoren bei einer Abgastemperatur von 450° C vor Katalysator wurde bei sonst gleichen Betriebsbedingungen wie oben bei drei verschiedenen Luftzahlen, nämlich 0,995; 0,999 und 1,008 ermittelt.

Die Ergebnisse der Untersuchungen sind in den Tabellen 1 und 2 zusammengefaßt. Tabelle 1 mit den Ergebnissen der Anspringtests zeigt eine günstigere Anspringtemperatur für die erfindungsgemäßen Katalysatoren nach Beispiel 1.

Die größten Konversions-Unterschiede zeigen sich jedoch bei betriebswarmen Katalysatoren, d.h. bei Betriebsverhältnissen, unter denen die Schadstoffumsetzung durch Massetransport der Abgaskomponenten aus der Gasphase zur Katalysatoroberfläche begrenzt wird. Die Umsetzung aller Schadstoffkomponenten, insbesondere aber die der Stickoxide, ist beim erfindungsgemäßen Katalysator nach Beispiel 1 deutlich besser als beim herkömmlichen Katalysator nach Vergleichsbeispiel 1. Wie Tabelle 2 zeigt, trifft dies für Katalysatoren im Frischzustand als auch nach Alterung am Motor zu.

Temperaturverteilung über den Austrittsquerschnitt der Katalysatoren K1 und VK1:

Die erfindungsgemäße Beschichtungsdispersion mit der bimodalen Korngrößenverteilung des Aluminiumoxids führt aufgrund der rauhen Beschichtungsoberfläche zu einer besseren Verwirbelung des Abgases und damit zu einer besseren Wärmeübertragung vom Abgas auf die Katalysatoroberfläche.

Zum Nachweis dieser Eigenschaften wurden mit den Katalysatoren aus Beispiel 1 und Vergleichsbeispiel 1 folgende Messungen durchgeführt.

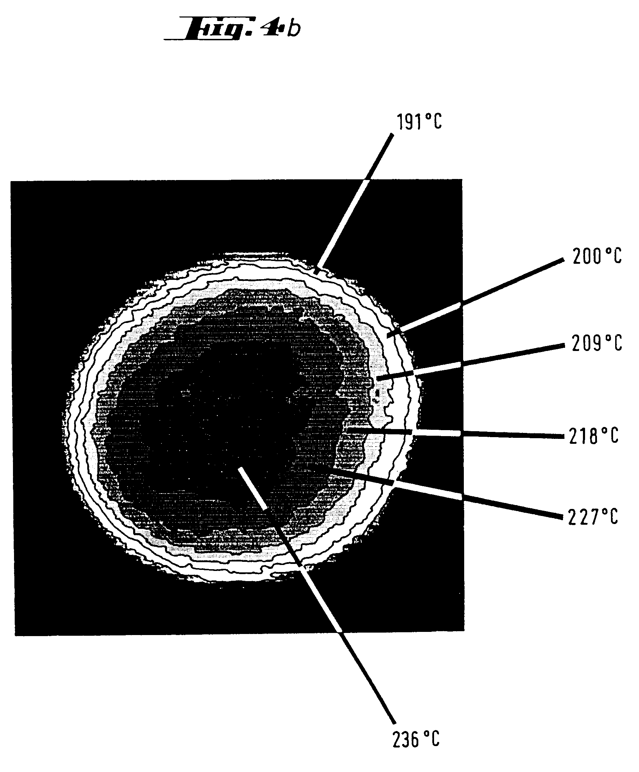

Die Katalysatoren wurden in einen Konverter eingebaut, der mit einem Konus mit einem Öffnungswinkel von 9° versehen war. Dieser Konverter wurde an ein Luftgebläse angebaut, welches mit einem Heizelement und einem Durchflußmassenmesser ausgerüstet war. Der Luftdurchsatz des Gebläses wurde auf 80 kg/h und die Solltemperatur der Luft auf 320° C eingestellt. Die Heizung wurde eingeschaltet und exakt nach einer Minute, nachdem die Luft am Eintritt des Katalysators die Temperatur von 320° C erreicht hatte, wurde die Temperaturverteilung der Austrittsstirnfläche des Katalysators mittels einer Infrarotkamera aufgenommen. Figur 4a und Figur 4b zeigen die daraus gewonnenen Isothermen über den Querschnitt der Austrittsfläche. Beim erfindungsgemäßen Katalysator von Beispiel 1, Figur 4b, hat nach einer Minute ein wesentlich größerer Teil der Stirnfläche die höchste Temperatur erreicht als dies beim Katalysator gemäß Vergleichsbeispiel 1, Figur 4a, der Fall ist. Das beweist, daß die Wärmeübertragung bei dem erfindungsgemäßen Katalysator mit der rauhen Oberflächenbeschichtung deutlich besser ist als bei einem Katalysator nach dem Stand der Technik.

Beispiel 2:

Beschichtungsdispersion aus Aluminiumoxid A und Aluminiumoxid B unterschiedlicher Korngrößenverteilung;
Promotoren: Ceroxid, Zirkonoxid, Eisenoxid und Bariumoxid als Lösungen

In Beispiel 1 wurde der Feinanteil der Beschichtungsdispersion durch Vermahlen eines Teiles des grobkörnigen Ausgangsmaterials (Aluminiumoxid A) gewonnen. Grob- und Feinanteil hatten also in dieser Beschichtungsdispersion die gleiche chemische Zusammensetzung und abgesehen von der Korngrößenverteilung auch im wesentlichen gleiche physikalische Eigenschaften (spezifische Oberfläche, Porenvolumen).

In Beispiel 2 wurden nun zwei unterschiedliche Aluminiumoxid-Qualitäten eingesetzt. Außerdem wurden die Promotoren der Dispersion in Form von Salzlösungen zugegeben.

Als Ausgangsmaterial für die feinteilige Fraktion der Dispersion diente wieder Aluminiumoxid A wie in Beispiel 1.

Zum Ansetzen der Dispersion wurden 3 Liter Wasser vorgelegt. In diese Wassermenge wurden 850 g Aluminiumoxid A eingerührt. Danach wurden nacheinander Zirkonylacetat entsprechend 85 g Zirkonoxid, Ceracetat entsprechend 167 g Ceroxid, Eisennitrat entsprechend 32 g Eisenoxid und schließlich Bariumacetat entsprechend 50 g Bariumoxid zugegeben. Die Dispersion wurde naß vermahlen bis eine Korngrößenverteilung mit einem Maximum der Verteilung bei zirka 2,8 $\mu$m entsprechend Figur 1 erreicht war.

Nach diesem Mahlvorgang wurden 150 g Aluminiumoxid B zugegeben. Die Beschichtungsdispersion wurde sorgfältig homogenisiert. Anschließend wurden damit Katalysatorkörper beschichtet. Diese Katalysatorvorstufen wurden wie schon beschrieben getrocknet, mit Platin und Rhodium imprägniert, kalziniert und zur Aktivierung reduziert.

Die fertigen Katalysatoren enthielten pro Liter Wabenkörpervolumen 160 g Beschichtungsmaterial zusammengesetzt aus 120 g $\gamma$-Aluminiumoxid, 20 g Ceroxid, 10 g Zirkonoxid, 5 g Eisenoxid und 5 g Bariumoxid, sowie 1,17 g Platin und 0,235 g Rhodium.

Die Katalysatoren gemäß Beispiel 2 werden im folgenden mit K2 bezeichnet.

Vergleichsbeispiel 2:

Beschichtungsdispersion aus Aluminiumoxid A und B mit gleicher Korngrößenverteilung;
Promotoren: Ceroxid, Zirkonoxid, Eisenoxid und Bariumoxid als Lösungen

In 3 Liter Wasser wurden 850 g Aluminiumoxid A und 150 g Aluminiumoxid B eingerührt. Anschließend wurden Zirkonylacetat entsprechend 85 g Zirkonoxid, Ceracetat entsprechend 167 g Ceroxid, Eisennitrat entsprechend 32 g Eisenoxid und Bariumacetat entsprechend 50 g Bariumoxid zugegeben. Die Dispersion wurde naß vermahlen bis eine für alle Feststoffe einheitliche Korngrößenverteilung entsprechend Fig. 1 erreicht war. Mit dieser Beschichtungsdispersion wurde wieder ein Katalysatorkörper, wie schon in Beispiel 1 beschrieben, beschichtet. Die so hergestellte Katalysatorvorstufe enthielt 160 g Beschichtungsdispersion pro Liter Wabenkörpervolumen, wobei sich diese Menge zusammensetzte aus 120 g $\gamma$-Aluminiumoxid, 20 g Ceroxid, 10 g Zirkonoxid, 5 g Eisenoxid und 5 g Bariumoxid.

Diese Katalysatorvorstufe wurde wie in Beispiel 2 mit Platin und Rhodium belegt. Der fertige Katalysator enthielt 1,17 g Platin und 0,235 g Rhodium pro Liter Wabenkörpervolumen.

Die Katalysatoren gemäß Vergleichsbeispiel 2 werden im folgenden mit VK2 bezeichnet.

Konversion von Kohlenmonoxid, Kohlenwasserstoffen und Stickoxiden durch die Katalysatoren K2 und VK2:

Die Umsetzung von Kohlenmonoxid, Kohlenwasserstoffen und Stickoxiden durch die Katalysatoren von Beispiel 2 und Vergleichsbeispiel 2 wurde nach einer Alterung von 80 h bei Luftzahlen von 0,999, einer Abgastemperatur von 450° C und einer Raumgeschwindigkeit von 60000 h-1 gemessen. Dabei wurde die Abgaszusammensetzung periodisch mit 1 Hz ± 0,5 A/F und 1 Hz ± 1,0 A/F durch Pulsen von Luft im Abgasstrom variiert. Die Ergebnisse dieser Aktivitätstest sind in Tabelle 3 zusammengefaßt. Die Katalysatoren sind in Tabelle 3 mit K2 und VK2 bezeichnet und beziehen sich auf Katalysatoren nach Beispiel 2 und Vergleichsbeispiel 2. Aus Tabelle 3 ergibt sich, daß die erfindungsgemäßen Katalysatoren aus Beispiel 2 eine deutlich bessere Konversion für alle drei Schadstoffkomponenten, insbesondere für die Konversion der Stickoxide zeigen als die Katalysatoren aus Vergleichsbeispiel 2.

Beispiel 3a:

Beschichtungsdispersion aus Aluminiumoxid A und Aluminiumoxid B unterschiedlicher Korngrößenverteilung; Promotoren: Ceroxid, Zirkonoxid als Lösungen.

Zum Ansetzen der Dispersion wurden 3 l Wasser vorgelegt. In diese Wassermenge wurden 850 g Aluminiumoxid A eingerührt. Danach wurden nacheinander Zirkonylacetat entsprechend 30 g Zirkonoxid und Ceracetat entsprechend 600 g Ceroxid zugegeben. Die Dispersion wurde naß vermahlen bis eine Korngrößenverteilung mit einem Maximum der Verteilung bei zirka 2,8 $\mu$m entsprechend Figur 1 erreicht war.

Nach diesem Mahlvorgang wurden 150 g Aluminiumoxid B zugegeben. Die Beschichtungsdispersion wurde sorgfältig homogenisiert. Anschließend wurden damit Katalysatorkörper beschichtet. Diese Katalysatorvorstufen wurden wie schon beschrieben getrocknet, imprägniert, kalziniert und zur Aktivierung reduziert.

Die fertigen Katalysatoren enthielten pro Liter Wabenkörpervolumen 163 g Beschichtungsmaterial zusammengesetzt aus 100 g $\gamma$-Aluminiumoxid, 60 g Ceroxid, 3 g Zirkonoxid, 1,17 g Platin und 0,235 g Rhodium. Sie werden im folgenden mit K3a bezeichnet.

Beispiel 3b:

Beschichtungsdispersion aus Aluminiumoxid A und Aluminiumoxid B unterschiedlicher Korngrößenverteilung; Promotoren: Ceroxid, Zirkonoxid als Lösungen.

Es wurde eine Beschichtungsdispersion analog zu Beispiel 3a mit geänderten Gewichtsverhältnissen zwischen Aluminiumoxid A und B angesetzt. Der Anteil von Aluminiumoxid A betrug 700 g und der von Aluminiumoxid B 300 g. Die mit dieser Beschichtungsdispersion hergestellten Katalysatoren enthielten also einen größeren Anteil vom groben Aluminiumoxid B. Sie werden im folgenden mit K3b bezeichnet.

Vergleichsbeispiel 3:

Beschichtungsdispersion aus Aluminiumoxid A und B mit gleicher Korngrößenverteilung; Promotoren: Ceroxid, Zirkonoxid als Lösungen

Es wurde eine Beschichtungsdispersion mit derselben Zusammensetzung wie in Beispiel 3b angefertigt. Gemäß dem Stand der Technik wurde jedoch eine einheitliche Korngrößenverteilung von Aluminiumoxid A und B durch gemeinsames Vermahlen analog zu Vergleichsbeispiel 2 erzeugt. Die mit dieser Beschichtungsdispersion angefertigten Katalysatoren werden im folgenden mit VK3 bezeichnet.

Temperaturverteilung über den Austrittsquerschnitt der Katalysatoren K3a, K3b und VK3:

Die Bestimmung der Temperaturverteilung über den Austrittsquerschnitt der Katalysatoren K3a, K3b und VK3 erfolgte analog zu dem Vorgehen unter Beispiel 1, allerdings wurden die Katalysatoren jetzt nicht mit heißer Luft durchströmt, sondern mit heißen Motorabgasen. Dazu wurden die Katalysatoren in einen Versuchskonverter eingebaut, der mit einem Konus von 9° versehen war. Dieser Konverter wurde in den Abgastrakt eines Motors am Motorprüfstand eingesetzt. Zwischen Abgaskrümmer und Konvertereintritt war ein Wärmetauscher angeordnet, mit dem die Abgastemperaturen unabhängig von Motordrehzahl und Motorlast eingestellt werden konnten.

Der Motor wurde in einem stabilen Betriebspunkt betrieben (Lambda = 0,999; Drehzahl = 2500 U/min; Last = 70 Nm). Mit Hilfe des Wärmetauschers wurde die Abgastemperatur vor Eintritt in den Konverter nacheinander auf 220, 240, 260 und 280° C eingestellt. Jeweils exakt nach einer Minute, nachdem das Abgas vor dem Katalysator eine der oben genannten Werte erreicht hatte, wurde die Temperaturverteilung über den Austrittsquerschnitt des Katalysatorkörpers mittels einer Infrarotkamera aufgenommen.

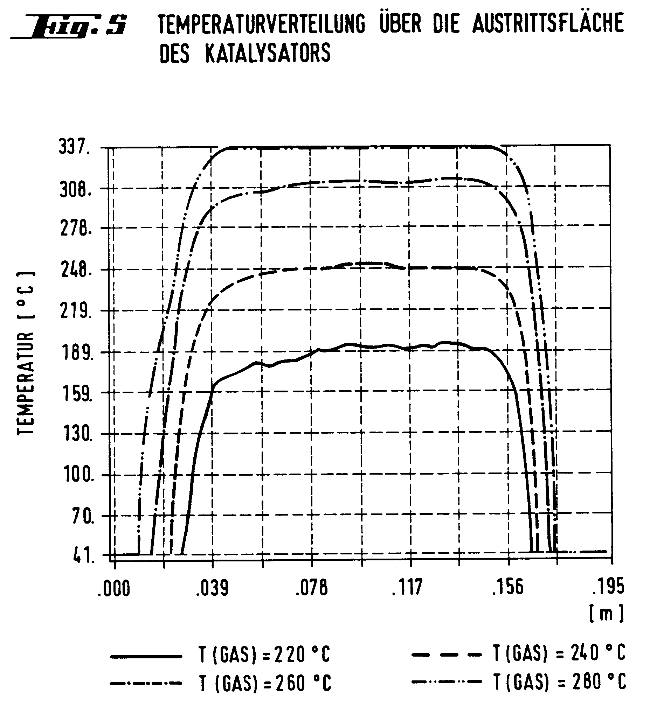

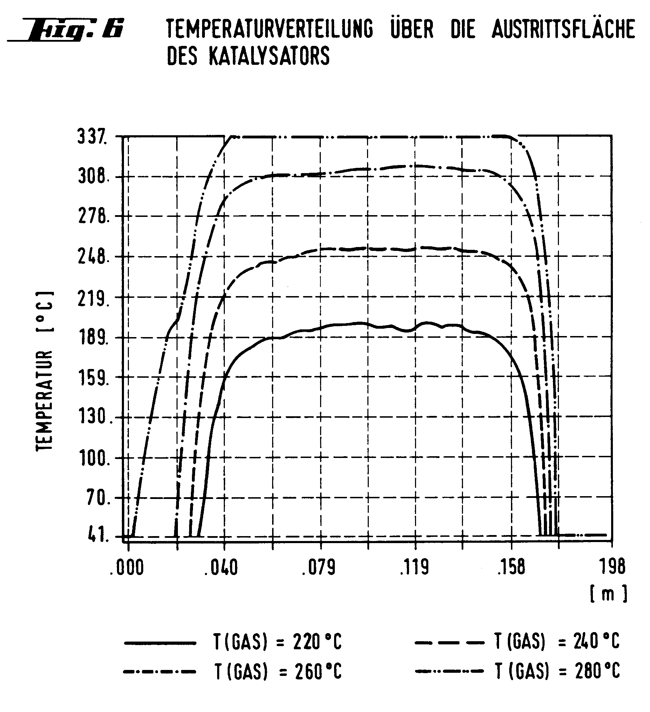

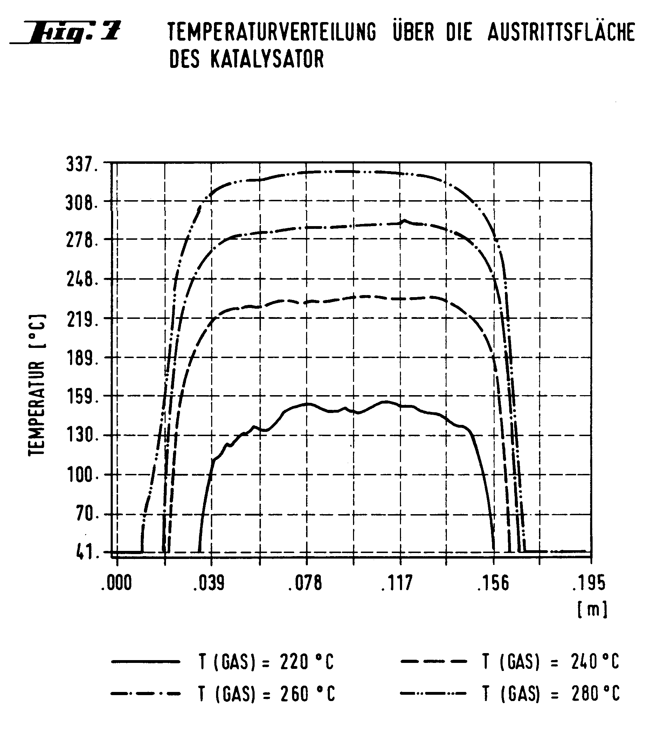

Die Auswertung dieser Aufnahmen ergab die Temperaturverteilungen in Figur 5 für die Katalysatoren von Beispiel 3a, in Figur 6 für die Katalysatoren von Beispiel 3b und in Figur 7 für die Katalysatoren nach dem Stand der Technik von Vergleichsbeispiel 3. Tabelle 4 enthält die aus diesen Temperaturverteilungen ermittelten Temperaturen auf der Austrittsfläche der Katalysatoren für die Mitte und für 25, 50 beziehungsweise 75 % des Radius der Katalysatoren.

Diese Ergebnisse zeigen in beeindruckender Weise, daß der Keramikkörper sich mit zunehmendem Grobanteil im Washcoat homogener und schneller aufheizt. Dieser Effekt wird durch die bei der Schadstoffkonversion auftretende Exotherme deutlich verstärkt.

Beispiel 4:

US-FTP 75 Test mit den Katalysatoren von Beispiel 3b und Vergleichsbeispiel 3

Die Katalysatoren aus Beispiel 3b und Vergleichsbeispiel 3 wurden an einem Fahrzeug (2,5 Liter, 6 Zylinder, Motronic) dem verschärften Abgastest US-FTP 75 unterworfen. Das Fahrzeug befand sich hierzu auf einem Abgasrollenprüfstand.

Die Katalysatoren wurden im Frischzustand als auch nach 60 stündiger Alterung am Motor getestet. Die Meßergebnisse sind in Tabelle 5 zusammengefaßt. Sie zeigt die Schadstoffemissionen während der besonders kritischen Kaltstartphase, in der die Aufheizkinetik der Katalysatoren maßgeblich die Schadstoffkonversion beeinflußt.

Die Ergebnisse des US-FTP 75 Tests zeigen, daß die Konversion von Kohlenmonoxid und Kohlenwasserstoffen in der kritischen Kaltstartphase durch die Katalysatoren von Beispiel 3b besser ist als von Katalysatoren aus dem Stand der Technik gemäß Vergleichsbeispiel 3.

Tabelle 1

| Katalysatoren von Beispiel 1 (K1) und Vergleichsbeispiel 1 (VK1) Anspringtemperaturen T50% für die Konversion von CO, HC und NOx | | | | |
|---|---|---|---|---|
| Katalysator | Zustand | T50% [°C] | | |
| | | CO | HC | NOx |
| K1 | frisch | 335 | 337 | 319 |
| VK1 | frisch | 340 | 345 | 321 |
| K1 | 20 h gealtert | 331 | 336 | 321 |
| VK1 | 20 h gealtert | 336 | 339 | 325 |
| Luftzahl : 0,995; Raumgeschwindigkeit: 60000 h$^{-1}$; Abgasmodulation : 1 Hz $\pm$ 0,5 A/F; | | | | |

Tabelle 2

| Katalysatoren von Beispiel 1 (K1) und Vergleichsbeispiel 1 (VK1) Konversion von CO, HC und NOx bei verschiedenen Luftzahlen | | | | | | | | | |
|---|---|---|---|---|---|---|---|---|---|
| Katalysator | Konversion [%] bei | | | | | | | | |
| | $\lambda = 0,995$ | | | $\lambda = 0,999$ | | | $\lambda = 1,008$ | | |
| | CO | HC | NOx | CO | HC | NOx | CO | HC | NOx |
| Frischzustand | | | | | | | | | |
| K1 | 92,9 | 95,4 | 82,4 | 95,2 | 95,5 | 76,2 | 98,1 | 95,4 | 68,1 |
| VK1 | 90,3 | 94,1 | 75,7 | 92,3 | 94,2 | 70,4 | 95,6 | 94,2 | 64,1 |
| 20 h gealtert | | | | | | | | | |
| K1 | 93,2 | 95,3 | 80,3 | 95,0 | 95,4 | 75,0 | 98,3 | 95,2 | 64,2 |
| VK1 | 89,3 | 93,5 | 72,2 | 90,9 | 93,6 | 69,7 | 95,4 | 93,6 | 60,7 |
| Abgastemperatur : 450° C Raumgeschwindigkeit: 60000 $h^{-1}$; Abgasmodulation : 1 Hz $\pm$ 0,5 A/F; | | | | | | | | | |

Tabelle 3

| Katalysatoren von Beispiel 2 (K2) und Vergleichsbeispiel 2 (VK2) Konversion von CO, HC und NOx | | | | | | |
|---|---|---|---|---|---|---|
| Katalysator | Konversion [%] bei | | | | | |
| | 1 Hz $\pm$ 0,5 A/F | | | 1 Hz $\pm$ 0,5 A/F | | |
| | CO | HC | NOx | CO | HC | NOx |
| K2 | 95,6 | 90,4 | 83,8 | 92,9 | 90,6 | 74,8 |
| VK2 | 93,7 | 89,5 | 77,9 | 90,7 | 90,1 | 71,2 |
| Luftzahl : 0,999; Abgastemperatur : 450° C Raumgeschwindigkeit: 60000 $h^{-1}$; Alterung : 80 h; | | | | | | |

Tabelle 4

| Temperaturverteilung über den Austrittsquerschnitt der Katalysatoren K3a, K3b und VK3 | | | | | | |
|---|---|---|---|---|---|---|
| Katalysator | Eintrittstemperatur [° C] | Radiale Temperaturverteilung | | | | |
| | | Mitte [° C] | 25% R [° C] | 50% R [° C] | 75% R [° C] | |
| K3a | 220 | 190 | 175 | 168 | 70 | |
| | 240 | 250 | 246 | 232 | 160 | |
| | 260 | 310 | 308 | 300 | 250 | |
| | 280 | 350 | 350 | 337 | 270 | |
| K3b | 220 | 195 | 190 | 175 | 70 | |
| | 240 | 253 | 250 | 236 | 160 | |
| | 260 | 310 | 310 | 308 | 250 | |
| | 280 | 350 | 350 | 337 | 270 | |
| VK3 | 220 | 145 | 140 | 130 | 40 | |
| | 240 | 225 | 225 | 220 | 160 | |
| | 260 | 280 | 280 | 278 | 220 | |
| | 280 | 325 | 325 | 320 | 280 | |

Tabelle 5

| Schadstoffemission in der Kaltstartphase des Abgastestes nach US-FTP 75 für frische und motorgealterte Katalysatoren | | | |
|---|---|---|---|
| Katalysator | CO [g/mile] | HC [g/mile] | NOx [g/mile] |
| K3b frisch | 5,29 | 0,75 | 0,52 |
| VK3 frisch | 8,85 | 0,75 | 0,50 |
| K3b gealtert | 9,60 | 0,87 | 1,08 |
| VK3 gealtert | 10,82 | 1,02 | 0,98 |

**Patentansprüche**

1. Beschichtungsdispersion zur Herstellung von katalysefördernden Überzügen auf einem inerten, strukturverstärkenden Körper aus einer wäßrigen Dispersion eines oder mehrerer temperaturbeständiger Trägermaterialien als Feststoff, wobei die Feststoffe der Dispersion eine mehrmodale Korngrößenverteilung mit verschiedenen Kornfraktionen aufweisen,
   **dadurch gekennzeichnet,**
   daß sowohl fein- und grobteilige Feststoffe in einer hochoberflächigen, aktiven Modifikation vorliegen, und die feinteilige Kornfraktion ein Verteilungsmaximum der Korngrößenverteilung zwischen 1 und 10 μm aufweist, und die gröbste Kornfraktion mittlere Korndurchmesser zwischen 20 und 100 μm besitzt, wobei das Gewichtsverhältnis der feinteiligen Fraktion zur grobteiligen Fraktion zwischen 20 : 1 und 1 : 2 liegt.

2. Beschichtungsdispersion nach Anspruch 1,
   **dadurch gekennzeichnet,**
   daß die Beschichtungsdispersion ein oder mehrere weitere Feststoffe und/oder ein oder mehrere gelöste Verbindungen als Promotoren und/oder aktive Komponenten enthält.

3. Beschichtungsdispersion nach den Ansprüchen 1 oder 2,
   **dadurch gekennzeichnet,**
   daß alle Feststoffe der Dispersion eine bimodale Korngrößenverteilung mit einer fein- und einer grobteiligen Kornfraktion aufweisen.

4. Beschichtungsdispersion nach den Ansprüchen 1 oder 2,
   **dadurch gekennzeichnet,**
   daß die Feststoffe der Dispersion eine bimodale Korngrößenverteilung aufweisen, wobei zumindest ein Feststoff in nur einer Kornfraktion vorliegt.

5. Beschichtungsdispersion nach Anspruch 4,
   **dadurch gekennzeichnet,**
   daß die Promotoren als Feststoffe vorliegen und nur der feinteiligen Fraktion angehören.

6. Beschichtungsdispersion nach Anspruch 2,
   **dadurch gekennzeichnet,**
   daß die aktiven Komponenten vollständig oder bevorzugt auf der grobteiligen Kornfraktion abgeschieden sind.

7. Verfahren zur Herstellung einer Beschichtungsdispersion nach Anspruch 3,
   **dadurch gekennzeichnet,**
   daß die bimodale Korngrößenverteilung der Dispersion dadurch erhalten wird, daß die Feststoffe zunächst in einer Korngrößenverteilung vorliegen, die der grobteiligen Fraktion der fertigen Beschichtungsdispersion entspricht, und ein Teil davon naß zu der Korngrößenverteilung der feinteiligen Fraktion vermahlen und anschließend das Mahlgut mit der restlichen, unvermahlenen Menge der Feststoffe homogen vermischt wird.

8. Verfahren zur Herstellung einer Beschichtungsdispersion nach Anspruch 5 mit aktivem Aluminiumoxid als Trägermaterial und Seltenerdoxiden, insbesondere Ceroxid, Zirkonoxid, Nickeloxid, Eisenoxid, Germaniumoxid und Bariumoxid als Promotoren,
   **dadurch gekennzeichnet,**
   daß ausgehend von einer Menge aktivem Aluminiumoxid, deren Korngrößenverteilung der grobteiligen Fraktion der fertigen Beschichtungsdispersion entspricht, die erforderliche bimodale Verteilung dadurch erhalten wird, daß ein Teil des Aluminiumoxids unter Zusatz der gewünschten Mengen Seltenerdoxide, Zirkonoxid, Nickeloxid, Eisenoxid, Germaniumoxid, Bariumoxid und Wasser naß zu der Korngrößenverteilung der feinteiligen Fraktion vermahlen und anschließend das Mahlgut mit der restlichen, unvermahlenen Menge Aluminiumoxid homogen vermischt wird.

9. Katalysator mit einem inerten, strukturverstärkenden Körper für die Reinigung der Abgase von Brennkraftmaschinen aus einem wabenförmigen, inerten Keramik- oder Metallkörper mit einer Dispersionsbeschichtung, die aktive Komponenten enthält, erhältlich durch Beschichten des strukturverstärkenden Körpers mit einer aktive Komponenten enthaltenden Beschichtungsdispersion, Trocknen der Dispersionsbeschichtung bei 250°C an Luft und Behandeln, gegebenenfalls in einem Wasserstoff enthaltenden Gasstrom, bei Temperaturen von 250 bis 650°C,
   **dadurch gekennzeichnet,**
   daß es sich bei der Beschichtungsdispersion um eine mehrmodale Dispersion gemäß den Ansprüchen 2 bis 6 handelt, die in einer Menge von 30 bis 400, bevorzugt 100 - 300, insbesondere 120 - 270 g Trockenmasse pro Liter Katalysatorvolumen auf den Katalysatorkörper aufgebracht ist.

10. Katalysator mit einem inerten, strukturverstärkenden Körper für die Reinigung der Abgase von Brennkraftmaschinen aus einem wabenförmigen, inerten Keramik- oder Metallkörper mit einer Dispersionsbeschichtung, auf die aktive Komponenten aufgebracht sind, erhältlich durch Beschichten des strukturverstärkenden Körpers mit einer Beschichtungsdispersion und Imprägnieren der bei 250°C an Luft getrockneten Dispersionsbeschichtung mit einer wäßrigen Lösung eines Salzes oder einer Mischung von Salzen der aktiven Komponenten, Trocknen und Behandeln, gegebenenfalls in einem Wasserstoff enthaltenden Gasstrom, bei Temperaturen von 250 bis 650°C,
    **dadurch gekennzeichnet,**
    daß es sich bei der Beschichtungsdispersion um eine mehrmodale Dispersion gemäß den Ansprüchen 1 bis 6 handelt, die in einer Menge von 30 bis 400, bevorzugt 100 - 300, insbesondere 120 - 270 g pro Liter Katalysatorvolumen auf den Katalysatorkörper aufgebracht ist.

**11.** Katalysator nach einem der Ansprüche 9 oder 10,
**dadurch gekennzeichnet,**
daß die mehrmodale Beschichtungsdispersion als Deckschicht auf mindestens eine Basisschicht aus katalytisch neutralem und/oder katalytisch aktivem Material aufgebracht ist.

**12.** Katalysator nach einem der Ansprüche 9 oder 10,
**dadurch gekennzeichnet,**
daß eine aus mehrmodaler Beschichtungsdispersion hergestellte Beschichtung als Unterlage mit einer Deckschicht aus aktivem und/oder schützendem feinteiligen Material versehen ist.

**Claims**

1. Coating dispersion for preparing catalysis-promoting coatings on an inert structure-reinforcing element comprising an aqueous dispersion of one or more heat-resistant support materials as solids, wherein the solids in the dispersion have a multimodal particle size distribution with different size fractions, characterised in that both finely divided and coarsely divided solids are present in a high surface area, active modification and the finely divided size fraction has a distribution maximum in the particle size distribution between 1 and 10 $\mu$m and the coarsest size fraction has an average particle diameter between 20 and 100 $\mu$m, wherein the ratio by weight of finely divided fraction to coarsely divided fraction is between 20 : 1 and 1 : 2.

2. Coating dispersion according to Claim 1, characterised in that the coating dispersion contains one or more other solids and/or one or more dissolved compounds as promoters and/or active components.

3. Coating dispersion according to Claims 1 or 2, characterised in that all the solids in the dispersion have a bimodal particle size distribution with a finely divided and a coarsely divided size fraction.

4. Coating dispersion according to Claims 1 or 2, characterised in that the solids in the dispersion have a bimodal particle size distribution, wherein at least one solid is present in only one size fraction.

5. Coating dispersion according to Claim 4, characterised in that the promoters are present as solids and are part of only the finely divided fraction.

6. Coating dispersion according to Claim 2, characterised in that the active components are completely or preferably deposited on the coarsely divided size fraction.

7. Process for preparing a coating dispersion according to Claim 3, characterised in that the bimodal particle size distribution in the dispersion is obtained by initially introducing the solid in a particle size distribution which corresponds to that of the coarsely divided fraction in the final coating dispersion and wet-milling some of that to give the particle size distribution in the finely divided fraction and then homogeneously mixing the milled material with the remaining unmilled quantity of solid.

8. Process for preparing a coating dispersion according to Claim 5 with active aluminium oxide as support material and rare earth oxides, in particular cerium oxide, zirconium oxide, nickel oxide, iron oxide, germanium oxide and barium oxide as promoters, characterised in that starting with an amount of active aluminium oxide whose particle size distribution corresponds to that of the coarsely divided fraction in the final coating dispersion, the required bimodal distribution is obtained by wet-milling some of the aluminium oxide while adding the desired amount of rare earth oxides, zirconium oxide, nickel oxide, iron oxide, germanium oxide, barium oxide and water to give the particle size distribution of the finely divided fraction and then homogeneously mixing the milled material with the remaining unmilled quantity of aluminium oxide.

9. Catalyst with an inert, structure-reinforcing element for the purification of exhaust gases from internal combustion engines comprising a honeycomb-shaped, inert ceramic or metal element with a dispersion coating which contains active components, obtainable by coating the structure-reinforcing element with a coating dispersion which contains the active components, drying the dispersion coating at 250°C in air and processing, optionally in a hydrogen-containing stream of gas, at temperatures of 250 to 650°C, characterised in that the coating dispersion is a multimodal dispersion in accordance with Claims 2 to 6 which is applied to the catalyst element in an amount of 30 to 400, preferably 100 - 300, in particular 120 to 270 g of dry substance per litre of catalyst volume.

10. Catalyst with an inert, structure-reinforcing element for the purification of exhaust gases from internal combustion engines comprising a honeycomb-shaped, inert ceramic or metal element with a dispersion coating, onto which are applied active components, obtainable by coating the structure-reinforcing element with a coating dispersion and impregnating the dispersion coating which has been dried at 250°C in air with an aqueous solution of a salt or a mixture of salts of the active components, drying and processing, optionally in a hydrogen-containing stream of gas, at temperatures of 250 to 650°C, characterised in that the coating dispersion is a multimodal dispersion in accordance with Claims 1 to 6 which is applied to the catalyst element in an amount of 30 to 400, preferably 100 - 300, in particular 120 - 270 g per litre of catalyst volume.

11. Catalyst according to one of Claims 9 or 10, characterised in that the multimodal coating dispersion is applied as a top coat to at least one base coat of catalytically neutral and/or catalytically active material.

12. Catalyst according to one of Claims 9 or 10, characterised in that a coating prepared from a multimodal coating dispersion is provided as a substrate with a top coat of active and/or protective finely divided material.

**Revendications**

1. Dispersion d'enduction pour la fabrication de revêtements favorisant la catalyse sur un support inerte, renforçant la structure, à partir d'une dispersion aqueuse d'un ou plusieurs matériaux de support résistant aux températures élevées comme matière solide, où les matières solides de la dispersion présentent une distribution granulométrique plurimodale avec plusieurs fractions granulométriques,
caractérisée en ce que
aussi bien les matières solides finement divisés que celles grossièrement divisées sont présentes dans une modification à grande surface et active, et que la fraction granulométrique finement divisée présente un maximum de distribution de la distribution granulométrique compris entre 1 et 10 $\mu$m, et que la fraction granulométrique la plus grossière possède une diamètre granulométrique compris entre 20 et 100 $\mu$m, où la proportion de poids de la fraction finement divisée par rapport à la fraction grossièrement divisée est compris entre 20 : 1 et 1 : 2.

2. Dispersion d'enduction selon la revendication 1,
caractérisée en ce que
la dispersion d'enduction contient une ou plusieurs autres matières solides et/ou un ou plusieurs composés dissous en tant que promoteurs et/ou composants actifs.

3. Dispersion d'enduction selon les revendication 1 ou 2,
caractérisée en ce que
toutes les matières solides de la dispersion présentent une distribution granulométrique bimodale avec une fraction finement divisée et une fraction grossièrement divisée.

4. Dispersion d'enduction selon la revendication 1 ou 2,
caractérisée en ce que
les matières solides de la dispersion présentent une distribution granulométrique bimodale où au moins une matière solide est présente en une seule fraction granulométrique.

5. Dispersion d'enduction selon la revendication 4,
caractérisée en ce que
des promoteurs sont présents comme matières solides et font uniquement partie de la fraction finement divisée.

6. Dispersion d'enduction selon la revendication 2,
caractérisée en ce que
les composants actifs sont déposés entièrement ou de préférence par dessus la fraction granulométrique grossièrement divisée.

7. Procédé de fabrication d'une dispersion d'enduction selon la revendication 3,
caractérisé en ce que
la distribution granulométrique bimodale est obtenue en ce que les matières solides sont présents en premier lieu en une distribution granulométrique correspondant à la fraction grossièrement divisée de la dispersion d'enduction finale, et qu'une partie de celles-ci est broyée par voie humide jusqu'à l'obtention d'une distribution granulométrique correspondant à la fraction finement divisée et que la mouture est ensuite mélangé de façon homogène avec la quantité subsistante de matières solides non broyées.

8. Procédé de fabrication d'une dispersion d'enduction selon la revendication 5, avec de l'oxyde d'aluminium actif en tant que matériau de support et des oxydes des terres rares, en particulier l'oxyde de cérium, l'oxyde de zirconium, l'oxyde de nickel, l'oxyde de nickel, l'oxyde de fer, l'oxyde de germanium et l'oxyde de baryum en tant que promoteurs,
caractérisé en ce qu'
à partir d'une quantité d'oxyde d'aluminium actif dont la distribution granulométrique correspond à la fraction grossièrement divisée de la dispersion d'enduction finale, la distribution bimodale nécessaire est obtenue en ce qu'une partie de l'oxyde d'aluminium est broyée par voie humide sous addition des quantités souhaitées d'oxydes des terres rares, d'oxyde de zirconium, d'oxyde de nickel, d'oxyde de fer, d'oxyde de germanium, d'oxyde de baryum, et d'eau jusqu'à l'obtention de la distribution granulométrique de la fraction finement divisée et que la mouture est ensuite mélangée de façon homogène avec la quantité restante d'oxyde d'aluminium non broyé.

9. Catalyseur avec un support inerte et renforçant la structure pour l'épuration des gaz d'échappement de moteurs à combustion interne, composé d'un support inerte en nid d'abeilles en céramique ou en métal avec une enduction de dispersion contenant des composants actifs, obtenu par l'enduction du support renforçant la structure avec une dispersion d'enduction contenant les composants actifs, séchage à l'air à 250°C et le cas échéant le traitement dans un flux contenant de l'hydrogène à des températures entre 250 à 650°C, caractérisé en ce que concernant la dispersion d'enduction, il s'agit d'une dispersion plurimodale selon les revendications 2 à 6, qui est appliquée sur le support du catalyseur en quantité de 30 à 400, de préférence 100-300, en particulier 120-270 g par litre de volume du catalyseur.

10. Catalyseur avec un support inerte et renforçant la structure pour l'épuration des gaz d'échappement de moteurs à combustion interne composé d'un support inerte en nid d'abeilles en céramique ou en métal avec une enduction par dispersion sur laquelle les composants actifs sont déposés,
obtenu par l'enduction du support renforçant la structure avec une dispersion d'enduction et par l'imprégnation de l'enduction séchée à 250°C à l'air d'une solution aqueuse d'un sel ou d'un mélange de sels des composants actifs, le séchage et le cas échéant le traitement dans un flux contenant de l'hydrogène à des températures entre 250 à 650°C,
caractérisé en ce que
concernant la dispersion d'enduction, il s'agit d'une dispersion plurimodale selon les revendications 1 à 6, qui est appliquée sur le support du catalyseur en quantité de 30 à 400, de préférence 100-300, en particulier 120-270 g par litre de volume du catalyseur.

11. Catalyseur selon une des revendication 9 ou 10,
caractérisé en ce que
la dispersion d'enduction plurimodale est appliquée comme couche de recouvrement sur au moins une couche de base d'un matériau catalytiquement neutre et/ou catalytiquement actif.

12. Catalyseur selon une des revendication 9 ou 10,
caractérisé en ce qu'
une enduction fabriquée à partir d'une dispersion d'enduction plurimodale comme couche inférieure est pourvue d'une couche de recouvrement d'un matériau finement divisé, actif et/ou de protection.

Fig. 1

Fig. 2

RÜCKSTAND   (GEW. IN %)

H x 10

RÜCKSTAND

KORNGRÖSSENVERTEILUNG

DURCHMESSER ( μm )

EP 0 556 554 B1

_Fig. 3_

191°C

200 °C

209 °C

218 °C

227°C

236°C

Fig. 4a

Fig. 4·b

191°C

200°C

209°C

218°C

227°C

236°C

**Fig. 5** TEMPERATURVERTEILUNG ÜBER DIE AUSTRITTSFLÄCHE
DES KATALYSATORS

T (GAS) = 220 °C          T (GAS) = 240 °C
T (GAS) = 260 °C          T (GAS) = 280 °C

## Fig. 6 TEMPERATURVERTEILUNG ÜBER DIE AUSTRITTSFLÄCHE DES KATALYSATORS

Legend:
- —— T (GAS) = 220 °C
- – – – T (GAS) = 240 °C
- –··–··– T (GAS) = 260 °C
- –··–··– T (GAS) = 280 °C

**_Fig. 7_** TEMPERATURVERTEILUNG ÜBER DIE AUSTRITTSFLÄCHE DES KATALYSATOR

TEMPERATUR [°C] vs [m]

——— T (GAS) = 220 °C       — — — T (GAS) = 240 °C

—·—·— T (GAS) = 260 °C       —··—··— T (GAS) = 280 °C